(19)

Europäisches
Patentamt
European
Patent Office
Office européen
des brevets

(11)     EP 2 093 713 A2

(12)                  EUROPEAN PATENT APPLICATION

(43) Date of publication:
     26.08.2009  Bulletin 2009/35

(51) Int Cl.:
     *G06T 7/20* (2006.01)

(21) Application number: 08163710.0

(22) Date of filing: 04.09.2008

(84) Designated Contracting States:
     AT BE BG CH CY CZ DE DK EE ES FI FR GB GR
     HR HU IE IS IT LI LT LU LV MC MT NL NO PL PT
     RO SE SI SK TR
     Designated Extension States:
     AL BA MK RS

(30) Priority: 20.02.2008 EP 08151681

(71) Applicant: **Nederlandse Centrale Organisatie Voor Toegepast Natuurwetenschappelijk Onderzoek TNO 2628 VK Delft (NL)**

(72) Inventors:
     • **Dubbelman, Gijs**
       **2611-ML, Delft (NL)**
     • **van der Mark, Wannes**
       **2315-EB, Leiden (NL)**

(74) Representative: **Hatzmann, Martin Vereenigde Johan de Wittlaan 7 2517 JR Den Haag (NL)**

(54)    **A method of estimating a motion of a multiple camera system, a multiple camera system and a computer program product**

(57)     The invention relates to a method of estimating a motion of a multiple camera system in a 3D space, wherein the field of view of multiple cameras at least partially coincide. The method comprises the step of calculating a multiple number of initial motion estimates for a motion of the multiple camera system between the time instant associated with a particular image set and a time instant of a subsequent image set, based on 3D position differences of image features in images of the particular set and the subsequent set, captured by a specific camera. The method further comprises the steps of characterizing the motion by motion parameters represented in the group of rigid-body motion in 3D, and determining an optimal set of motion parameters in the group of rigid-body motion in 3D.

EP 2 093 713 A2

**Description**

The present invention relates to a method of estimating a motion of a multiple camera system in a three-dimensional (3D) space, wherein the field of view of multiple cameras at least partially coincide, the method comprising the steps of providing a subsequent series of image sets that have substantially simultaneously been captured by the multiple camera system, identifying a multiple number of corresponding image features in a particular image set, determining 3D positions associated with said image features based on a disparity in the images in the particular set, determining 3D positions associated with said image features in a subsequent image set, and calculating a multiple number of initial motion estimates for a motion of the multiple camera system between the time instant associated with the particular image set and the time instant of the subsequent image set, based on 3D position differences of image features in images of the particular set and the subsequent set, captured by a specific camera.

More in particular, the present invention relates to robust motion estimation. As an example, the present invention relates to robust ego-motion estimation of a moving vehicle using an onboard stereo-rig, also known as stereo-based visual odometry.

Stereo processing allows estimation of a 3D location and associated uncertainty of landmarks in the view of a stereo camera. By identifying a multiple number of corresponding image features in a particular image set, 3D point clouds for each image set, in this case a stereo frame, can be obtained. By establishing frame-to-frame correspondences of landmarks, the point clouds of successive stereo frames can be related to each other. By determining 3D position differences of the image features over subsequent image sets initial motion estimates can be computed based on said position differences, in other words, from these corresponding point clouds a frame-to-frame motion of the stereo-rig can be estimated, see e.g. the article "Estimation of nonlinear errors-in-variables models for computer vision applications" by B.C. Matei and P. Meer, IEEE Transactions on Pattern Analysis and Machine Intelligence, vol. 28, no. 10, pages 1537-1552, October 2006 and the article "Least square estimation of transformation parameters between twopoint patterns" by S. Umeryama, IEEE Transactions on Pattern Analysis and Machine Inteliigence, vol. 13, no. 4, pages 376-380, 1991. By concatenating all the frame-to-frame motion estimates, the pose of the stereo-rig and vehicle can be tracked.

In general, vision based approaches to ego-motion estimation are susceptible to outlier landmarks. Sources of outlier landmarks range from sensor noise and correspondences errors to independent moving objects such as cars or people that are visible in the camera views. Similarly, inlier motion samples are associated with objects that remain stationary over the subsequent image sets.

In the past decade RANSAC emerged as a standard for robust parameter estimation in computer vision. The RANSAC method is disclosed in the paper "Random sample consensus: a paradigm for model fitting with applications to image analysis and automated cartography" by M. A. Fischler and R. C. Bolles, Communications of the ACM, vol. 24, no. 6, pp. 381 - 395, June 1981.

Hence, the RANSAC method is used in many visual odometry systems. The idea is to take a number of minimal set (containing for example 6 landmarks) motion estimates, e.g. a fast estimation, and score them on how well they align with all the landmarks. Based on the best scoring minimal set motion estimate the inlier landmarks can be obtained. Often, refinement of the initial RANSAC estimate based on the found inlier landmarks is performed. Since the paper by Fischler and Bolles, many different RANSAC approaches have emerged. Most notably, for the case of visual odometry, is pre-emptive RANSAC, disclosed in a paper by D. Nistr in 2005, which allows evaluating a larger number of minimal set motion estimates in the same amount of time. Also, using some sort of multi-frame optimization or multi-frame landmark tracking is frequently used. In an extreme case, this leads to simultaneous localization and mapping approaches.

Related to ego-motion estimation is the problem of pose estimation which involves estimating a motion of an object from images taken by a fixed camera or by a number of fixed cameras. Recently, other approaches instead of RANSAC have emerged for robust pose estimation. Most of these methods use statistics or parameter estimation of some sort together with Riemannian geometry or Lie algebra to obtain a robust estimate. These approaches are inspired by research into the geometry of robotics.

European Patent Application EP 1 727 089 discloses an ego-motion determination system for generating an estimate regarding the ego-motion of a vehicle moving along a road. In this known system, an ego-motion estimate of the vehicle is generated which includes the translation of the vehicle in the forward direction and the rotation of the vehicle about a vertical axis between successive images. However, generating such estimates requires much processing power. In addition, the estimates may be inaccurate and may cause errors, especially if the inaccuracy is not noticed.

International Patent Application WO 2006/002322 discloses a method and apparatus for visual odometry, e.g. for navigating in a surrounding environment. A sequence of scene imagery is received that represents at least a portion of the surrounding environment. The sequence of scene imagery is processed to derive an estimate of a pose relative to the surrounding environment. This estimate may be further supplemented with data from other sensors, such as a global positioning system or inertial or mechanical sensors. This known method and apparatus use a RANSAC-type algorithm. The additional sensors are required to maintain sufficient accuracy. In addition, this known method and system require much processing power.

It is an object of the invention to provide an improved method of estimating a multiple camera system in a 3D space according to the preamble.

Thereto, according to the invention, the method further comprises the steps of characterizing the motion by motion parameters represented in the group of rigid-body motion in 3D, and determining an optimal set of motion parameters in the group of rigid-body motion in 3D.

By representing motion parameters in the group of rigid-body motion in 3D, inlier motion samples can advantageously be filtered from outlier motion samples, thereby improving the robustness of the estimation scheme.

Further, by applying an expectation maximization algorithm to the motion parameters in a local linearization of the group of rigid-body motion in 3D, a robust estimate of the motion can efficiently be found. By combining the approach of representation in the group of rigid-body motion in 3D and the approach of the expectation maximization algorithm, the method efficiently focuses on direct sensory information that is most reliable on a per sensor basis. As a result, the method provides a reduced computation time, so that less processing power is needed. In addition, the algorithm ensures that outlier motion estimates do no influence the computation of the mean motion or the local linearization process, thus providing a robust estimate of the mean motion. Further, the method according to the invention scales more favourably in the number of initial motion estimates. As an alternative, instead of applying the expectation maximization algorithm, another optimization routine can be applied.

By adding estimated motions associated with motions performed after successive time instants, a full 3D motion of the multiple camera system can be obtained from the concatenation of individual estimated motions.

Further, by computing an error estimation of a motion estimation, a remaining uncertainty of the obtained motion estimation, e.g. a covariance parameter, can advantageously be evaluated.

In an embodiment, the motion parameters include 3D motion information and 3D rotation information of the multiple camera system, thereby covering both translation and rotation information of the multiple camera system.

In an efficient embodiment according to the invention, the step of calculating a multiple number of initial motion estimates includes using a method of minimal squared distances, so that an optimal initial motion estimator is obtained based on heteroscedastic point clouds. Obviously, also other initial motion estimates can be generated, e.g. a simpler estimator requiring less computation time.

Advantageously, the step of applying an expectation maximization algorithm includes an iterative process wherein motion estimates are weighted according to inlier and outlier models, so that the influence of outlier landmarks is minimized. As an example, the inlier model includes a Gaussian distribution and/or the outlier model includes a uniform distribution. It is noted that also other models can be used, e.g. depending on information of the 3D space that wherein the multiple camera system moves.

In order to allow efficient computation, at each iteration, a local linearization of the group of rigid-body motion in 3D might be performed with respect to a mean motion found in a previous iteration, so that the linearization approaches the group of rigid-body motion in 3D well. Hence, only the relative difference between rotations in the set must be relatively small. However, the absolute magnitudes of these rotations can be arbitrarily large.

The invention also relates to a multiple camera system.

Further, the invention relates to a computer program product. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

Other advantageous embodiments according to the invention are described in the following claims.

By way of example only, embodiments of the present invention will now be described with reference to the accompanying figures in which

Fig. 1 shows a schematic perspective view of an embodiment of a multiple camera system according to the invention;
Fig. 2 shows an image captured by the system of Figure 1;
Fig. 3 shows a block scheme of the system of Figure 1;
Fig. 4a shows a first real data image;
Fig. 4b shows a second real data image;
Fig. 5 shows a top view of an estimated trajectory;
Fig. 6 shows a rotation covariance matrix;
Fig. 7 shows a table illustrating standard devications;
Fig. 8a shows a first performance graph;
Fig. 8b shows a second performance graph; and
Fig. 9 shows a flowchart of an embodiment of the method according to the invention.

It is noted that the figures show merely a preferred embodiment according to the invention. In the figures, the same reference numbers refer to equal or corresponding parts.

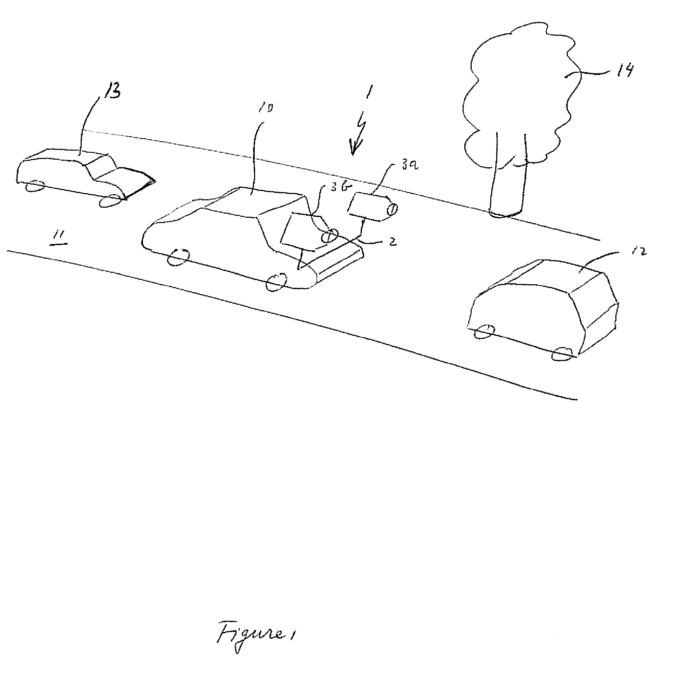

Figure 1 shows a schematic perspective view of a multiple camera system 1 according to the invention. The system 1 comprises a frame 2 carrying two cameras 3a, 3b that form a stereo-rig. The camera system 1 is mounted on a vehicle 10 that moves in a 3D space, more specifically on a road 11 between other vehicles 12, 13. A tree 14 is located near the road 11. The multiple camera system 1 is arranged for capturing pictures for further processing, e.g. for analyzing crime scenes, accident sites or for exploring areas for military or space applications. Thereto, the field of view of the cameras 3a, 3b at least partially coincides. Further, multiple camera system can be applied for assisting and/or autonomously driving vehicles. According to an aspect of the invention, the multiple camera system is arranged for processing the captured images such that an estimation of the camera system motion in the 3D space is obtained.

Optionally, the system 1 according to the invention is provided with an attitude and heading reference system (AHRS), odometry sensors and/or a geographic information system (GIS).

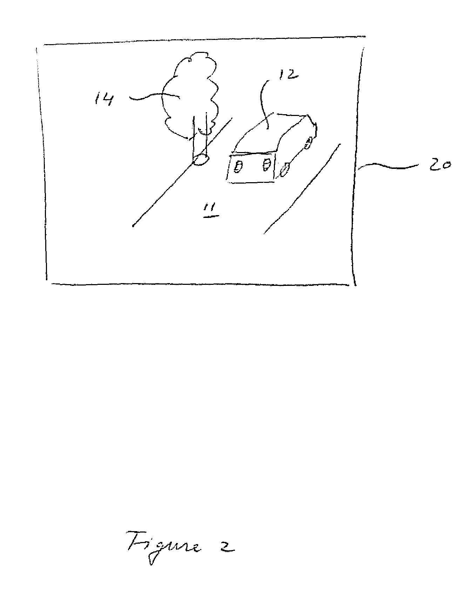

Figure 2 shows an image 20 that has been captured by one of the cameras 3a, 3b, corresponding with the situation shown in Figure 1. Clearly, the road 11, the preceding vehicle 12 and the tree 14 are visible in the image 20. From stereo images that have substantially simultaneously been captured by the multiple camera system 1, features in the image 20, such as the vehicle 12 and the tree 14 can be localized with respect to the vehicle 10 in the 3D space. By interrelating localizations over time, a movement of the vehicle 10 can be traced.

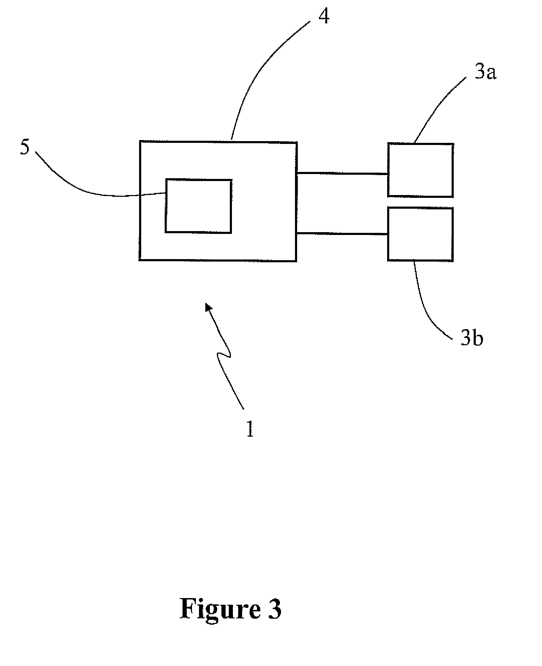

Figure 3 shows a block scheme of the system 1 according to the invention. The multiple camera system 1 comprises a computer system 4 provided with a processor 5 to process images that have been captured by the cameras 3a, 3b.

Below, the benefits of applying RANSAC and similar approaches to frame-to-frame visual odometry will be described. Also, an embodiment of the method according to the invention, including an Expectation Maximization algorithm on a local linearization of the group of rigid-body motion in 3D, i.e. $SE(3)$, will be described. The latter algorithm is compared against a RANSAC based approach. The focus is on the influence of the number of minimal set motion estimates that is needed to obtain a robust result.

One of the goals of the embodiment of the method according to the invention is computing the robust mean 3D motion $\overline{M}$ and its covariance $\Sigma$ from a set of motion samples $M = \{M^1 ..... M^n\}$. For this, Expectation Maximization (EM) is used in the group of Euclidean transformations in 3D space i.e. SE(3). EM is an iterative algorithm often used for finding the parameters of a mixture model. Here, a similar approach is taken for finding the parameters of a two class model, that is inlier motion samples versus outlier motion samples. The inliers are motion samples belonging to the true motion of the multiple camera system assumed to be perturbed with Gaussian noise, while the outlier motion samples are modeled by an uniform distribution. The representation of SE(3) used in the algorithm is described below.

In general, a rigid body transformation comprises translation and rotation. The group of rigid body transformations in three-space is often called the special Euclidean group SE(3). Usually, an element of SE(3) is represented as a four by four homogeneous matrix. Here, it is chosen to represent the rotational part using an unit quaternion and the translational part as a three vector. Using unit quaternions for modeling rotations has certain benefits over the matrix representation. However, by choosing this representation the ability to define one monolithic logarithmic map on the elements of $SE(3)$ is lost. Thus, the translational part and rotational part will be mapped independently. In fact, the translational part will not be mapped at all. When computing the mean motion there is primarily no interest in the group structure of $SE(3)$. Note that the set of motion samples are estimates from the same real-world motion at one particular point in time. Therefore, the rotations do not affect the translations, as would be the case when the motion samples formed a chain of rigid body transformations. Clearly, not all aspects of the group structure and its operations are relevant when computing the mean motion. Also keeping the rotational part and the translational part separated when applying a metric to $SE(3)$ is in line with the article "Distance metrics on the rigid-body motions with applications to mechanism design" by F. Park Transactions of the ASME, Vol. 117, March 1995. Before continuing with the representation of $SE(3)$ attention is now paid on quaternions.

Quaternions will be denoted as q and consists of a 1D real part $q$ and a 3D spatial part $\vec{q} = (q_i i + q_j j + q_k k)$ given on the basis $i, j, k$ $(i^2 = j^2 = k^2 = ijk = -1)$. Thus, q = $(q + \vec{q})$. Quaternion addition is simply the pairwise addition of their elements. The inverse of a unit quaternion is given by its conjugate q$^* = (q - \vec{q})$. The identity quaternion is defined as $e = (1+0i+0j+0k)$. A rotation around a normalized axis $\vec{r}$ with angle θ can be put into quaternion form with q = $(cos(\theta/2) + sin(\theta/2)\vec{r})$. To rotate an arbitrary vector $\vec{v}$ it can be represented as a quaternion i.e. v = $(0+\vec{v})$. Then given the quaternion q we apply its rotation on v by using v = qvq$^*$. Where the quaternion product is defined as $q_1 q_2 = (q_1 q_2 - \vec{q} \cdot \vec{p} + q_1 \vec{p} + q_2 \vec{q} + \vec{q} \times \vec{p})$ and the dot and cross product are defined as usual. Note that the quaternion product is anti commutative, associative and left/right distributive over addition. The space of unit quaternions can be thought of as the surface of a unit sphere in 4D space. Therefore, the Euclidean distance between quaternions is far from appropriate. It is often useful to approximate such a non-flat manifold by a linear subspace i.e. its tangent space. To go from the group of rotations SO(3) to its tangent space so(3) at the identity the so called logarithmic mapping is defined: log : $SO(3) \rightarrow$ so(3), log(q) = q. To go from the tangent space so(3) to $SO(3)$ the exponential mapping exp : so(3) $\rightarrow SO(3)$, $exp(q)$ = q, is defined. For unit quaternions these mappings are:

$$q = \log(q) = \begin{cases} (\arccos(q)\dfrac{\vec{q}}{\|\vec{q}\|}), & q \neq 0 \\[3mm] (0,0,0), & q = 0 \end{cases} \qquad (1)$$

and

$$q = exp(q) = \begin{cases} (\cos(\|q\|) + \sin(\|q\|)\dfrac{q}{\|q\|}), & \|q\| \neq 0 \\[3mm] e, & \|q\| = 0 \end{cases} \qquad (2)$$

It is useful to not only define the tangent space at the identity. Therefore, a placement function which is composed of quaternion operations can be applied. To place $q_2$ in the tangent space at $q_1$ the equation

$$q = log_{q_1}(q_2) = log(q_1^{*}q_2) \qquad (3)$$

can be used. Further, to retrieve $q_2$ from the tangent space defined at $q_1$ the equation

$$q_2 = exp_{q_1}(q_2) = q_1 exp(q_2) \qquad (4)$$

can be used. These operations are important because they allow use to linearize SO(3) at a certain point of interest, for instance at the mean rotation of q. This causes less linearization errors than always linearizing at the identity. The idea behind linearization of SO(3) is allowing to treat so(3) as if it were $R^3$ and subsequently use statistical methods for $R^3$ on so(3). The problem that is solved here is that SO(3) is not an Euclidean space and therefore, the Euclidean distance in not appropriate. Because the Euclidean distance is the basis for statistical methods in $R^n$, it is assumed that by transforming SO(3) to so(3) and treat it as $R^3$ statistical inference can be made about *SO*(3). This whole approach is based on the applicability of the approximation

$$\exp(q_1)\exp(q_2) = \exp(q_1 + q_2 + \frac{1}{2}[q_1, q_2] + O(\|q_1 - q_2\|^3)) \qquad (5)$$

with

$$\exp(q_1)\exp(q_2) \approx \exp(q_1 + q_2) \qquad (6)$$

where $[q_1, q_2]$ is the so called Lie bracket. Here, not only the non linearity is dropped but also the anti-commutative nature of the quaternion multiplication. Note that equation (6) is only appropriate when $\|q_1 - q_2\|$ is small. This is of major concern when calculating the mean motion, as will be explained below.

Attention is now paid to the used representation of *SO*(3). An element of SE(3) consisting of translation $\vec{v}$ and rotation embedded in a unit quaternion q is M = ($\vec{v}$,q). Properties such as associativity, unique inverse and identity can easily be proven for this used representation of *SE*(3) when the embedding and extraction of $\vec{v}$ in and from the quaternion v is made part of operations. Thus, the group structure of *SE*(3) also holds for this representation. The localized partial logarithmic and exponential mappings on the used representation of SO(3) are defined as:

$$\mathsf{m} = log_{M_1}(M_2) = (t_2, log_{q_1}(q_2)) \qquad (7)$$

$$M = exp_{M_1}(\mathsf{m}_2) = (t_2, exp_{q_1}(\mathsf{q}_2)) \qquad (8)$$

Therefore, the translational part is completely unaffected by the partial logarithmic and exponential mappings. The first three elements of m contain the translation and the last three elements contain the rotation axis with length equal to the rotation angle. Putting them together in a six dimensional vector allows for compact formulas and efficient computation. However, one has to note that they are distinct elements and for example computing the correlation between a dimension in the translational part and a dimension in the rotational part is not allowed.

In order to perform expectation maximization on SE(3), the weighted mean of a set of motion samples ($M_1$.....$M_n$) must be calculated. Attention is paid to the unweighed case. Given the logarithmic and exponential mappings defined above, the mean motion $\overline{M}$ is obtained by minimizing the following function:

$$\underset{\overline{M} \in SE(3), \hat{M} \in SE(3)}{\operatorname{argmin}} \quad \sum_{i=1}^{n} \left\| log_{\hat{M}}(\overline{M}) - log_{\hat{M}}(M_i) \right\| \qquad (9)$$

The challenge here is that two goals have to be met simultaneously. That is, firstly, minimizing the summed squared difference between $\overline{M}$ and the motion samples in the set ($M_1$.....$M_n$). Secondly, choosing a linearization point $\hat{M}$ such that treating so(3) as $R^3$ is as appropriate as possible. This linearization point $\hat{M}$ should have minimal summed distance to the motion samples in the set. If a linearization point is sought that has minimal summed squared distance to the motion samples in the set, the linearization point and the mean motion are the same. Solving such a problem can be done by using an iterative approach. Firstly, linearization of SE(3) is performed at the identity (or the motion estimate from the previous time-step) by using the logarithmic map. Then, the mean rotation is computed in se(3) and transformed back to $SE$(3) using the exponential map. In the next iteration, linearization of $SE$(3) is performed using the new mean. Again, the mean is computed in se(3) and transformed back to $SE$(3). This goes on until convergence or until j has reached a maximum. Thus, the weighted mean motion can be computed with:

$$\overline{M}^j = exp_{\overline{M}^{j-1}}\left(\frac{\sum_{i=1}^{n} w_n \log_{\overline{M}^{j-1}}(M_i)}{\sum_{i=1}^{n} w_n}\right) \qquad (10)$$

The EM algorithm, which will be described below, treats the motion samples as vectors in $R^6$. It has been shown that a mapping can be performed from $SE$(3) to se(3) for treatment as in $R^6$. When doing so, special care is needed for the linearization point i.e. the point at which the logarithmic map is applied. Therefore, equation (10) has an essential role in applying an EM algorithm intended for $R^6$ on $SE$(3).

One of the goals of the EM algorithm is to make a distinction between inlier and outlier motion estimates and subsequently computing the mean of the inlier motion samples. As an example, the tree 14 in the image 20 is an inlier, while the moving preceding vehicle 12 is an outlier. The inlier motion estimates can be modelled with a single Gaussian distribution. The outlier motion estimates can be modeled with a fixed uniform distribution. $p(I)$ and $p(O)$ are the fixed probabilities of the inlier and outlier classes respectively i.e. the mixing weights. Furthermore, $p(\mathsf{m}_i \mid \theta_I^k)$ is the probability that motion sample $M_i$ is an inlier given the inlier parameters $\theta_I^k$ at iteration $k$ of the EM algorithm. Similar notation is used for the outliers i.e. $p(\mathsf{m}_i \mid \theta_O^k)$. Note that these probabilities are calculated on the logarithmic mappings of the motion samples. Because the parameter of the outlier class is held fixed, $p(O)p(\mathsf{m}_i \mid \theta_O^k)$ shall be written as a constant $C$. Given these quantities the log expectation of the motion samples can be written as:

$$Q(\theta_I^k, \theta_I^{k-1}) = \sum_{i=1}^{n} I_i \log(p(I)) + I_i \log(p(\mathsf{m}_i \mid \theta_I^k)) + O_i \log(C) \qquad (11)$$

where the inlier weights $I_i$ and outlier weights $O_i$ are expressed as:

$$I_i = \frac{P(I)P(m_i \mid \theta_I^{k-1})}{P(I)P(m_i \mid \theta_I^{k-1}) + C}$$

$$O_i = \frac{C}{P(I)P(m_i \mid \theta_I^{k-1}) + C} \qquad (12)$$

For clarity, log and exp have their usual meaning in formulas concerning probabilities. Since $P(\mathsf{m}_i \mid \theta_I^{k-1})$ is Gaussian, it is given by:

$$p(\mathsf{m}_i \mid \theta_I) = \frac{1}{(2\pi)^{1/6} \sqrt{|\Sigma_{\mathsf{m}}|}} e^{-\frac{1}{2}(\mathsf{m}_i - \overline{\mathsf{m}})^{\mathrm{T}} \Sigma_{\mathsf{m}} (\mathsf{m}_i - \overline{\mathsf{m}})} \qquad (13)$$

Note that $\Sigma_{\mathsf{m}}$ can be forced to have the form:

$$\Sigma_m = \begin{bmatrix} \Sigma_{\vec{v}} & 0 \\ 0 & \Sigma_{\mathsf{q}} \end{bmatrix}$$

Thus, the translation and rotation are independent and $p(m) = p(\vec{v})p(q)$. The goal is to maximize Q with respect to $\theta_I^k$ i.e. the new mean motion $\overline{m}^k$ and its covariance $\Sigma_{\mathsf{m}}^k$. Taking the derivative of Q to $\overline{m}^k$, setting it to zero and solving for $\overline{m}^k$ gives:

$$\overline{\mathsf{m}}^k = \frac{\sum_{i=1}^{n} I_i \mathsf{m}_i}{\sum_{i=1}^{n} I_i} \qquad (14)$$

This formula does not take into account the errors introduced by the logarithmic mapping. Therefore, equation (10) might be used for iteratively computing the weighted mean motion during every EM iteration. Next optimizing Q with respect to $\Sigma_{\mathsf{m}}^k$, given the new mean, results in:

$$\Sigma_m^k = \frac{\sum_{i=1}^{n} I_i (m_i - \overline{m}^k)(m_i - \overline{m}^k)^T}{\sum_{i=1}^{n} I_i} \qquad (15)$$

Clearly, computing the elements of the upper right block and the lower left block of $E_m$ is not necessary; said elements can be set to zeros. The EM algorithm iterates between computing the weights with equation (12) given the current parameters $\theta^{k-1}$ i.e. the expectation step, and computing the new parameters $\theta^k$ with equations (10) and (15) given the new weights i.e. the maximization step. The algorithm continues until convergence or until k has reached a maximum.

In order to obtain the motion estimates $(M_1.....M_n)$ needed for the EM algorithm, a stereo vision based approach is used. A rectified stereo rig is used to capture stereo frames. Estimating the ego-motion between successive stereo frames involves establishing image feature correspondences between the images in the stereo frames and between the stereo frames themselves. To this purpose the Scale Invariant Feature Transform (SIFT), see e.g. "Distinctive image features from scale-invariant keypoints" by D.G. Lowe, International Journal of Computer Vision, Vol. 60, No. 2, 2004) may be used, where only the first three octaves of scale space are processed. However, also other techniques might be used to identify and match feature points, e.g. a Harris-Stephens corner detector of Speeded Up Robust Features (SURF), see e.g. the article "A combined corner and edge detector" by Harris et al., Proceedings of the 4th Alvey Vision Conference, pages 147-151, 1988, and the article "SURF:speede up robust features" by Bay et al., Proceedings of the nineth European nConference on Computer Vision, May 2006. Image feature matching might be based on the distance between their SIFT descriptors. A threshold is applied on the descriptor distance to ensure reliable matches. Furthermore, back-and-forth and left-to-right consistency is enforced. From an image point in the left image $\vec{v}_l = [x_l, y_l]$ and its corresponding point in the right image $\vec{v}_r = [x_r, y_r]$ the disparity can be obtained with sub-pixel accuracy $d = x_l - x_r$. Using this disparity $d$ the focal length of the left camera $f$ and the stereo base line $b$, the three-dimensional position of the projected world point relative to the left camera can be recovered with:

$$\vec{V} = \left[ X_l = \frac{x_l b}{d}, \quad Y_l = \frac{y_l b}{d}, \quad Z_l = \frac{fb}{d} \right]^T \qquad (16)$$

For each reconstructed world point its three-dimensional uncertainty $\Sigma_{\vec{V}}$ is computed. This uncertainty is based on error-propagation of the image feature covariance using the Jacobian $J$ of the reconstruction function. Hence,

$$\Sigma_{\vec{V}} = J \begin{bmatrix} \Sigma_{\vec{v}_l} & 0 \\ 0 & \Sigma_{\vec{v}_r} \end{bmatrix} J^T \qquad (17)$$

and

$$J = \begin{bmatrix} \dfrac{-x_l b}{d^2} + \dfrac{b}{d} & 0 & \dfrac{x_l b}{d^2} & 0 \\ \dfrac{-y_l b}{d^2} & \dfrac{b}{d} & \dfrac{y_l b}{d^2} & 0 \\ \dfrac{-fb}{d^2} & 0 & \dfrac{fb}{d^2} & 0 \end{bmatrix} \qquad (18)$$

Here, $\Sigma_{\vec{v}_l}$ and $\Sigma_{\vec{v}_r}$ are the image feature covariance matrices in the left and right images respectively. For the purpose of the algorithm, only the shape and relative magnitude of image feature covariances are important. Therefore, it suffices to estimate $\Sigma\vec{v}$ with:

$$\Sigma_{\bar{v}} = s \frac{G^{-1}}{\sqrt{\left|G^{-1}\right|}} \qquad (19)$$

where $s$ is the scale of the image feature in scale-space and $G$ is the gradient Grammian at $\vec{v}$.

For every stereo frame, the process described above can be used to obtain a set of 3D points with their 3D uncertainties and their SIFT descriptors. Using these SIFT descriptors, points from successive stereo frames can be related to each other. This gives a set $T$ of time corresponding points i.e. $T = \{T^1.....T^n\}$, where each $T$ contains the 3D coordinates and associated uncertainty of one particular point before the motion and one particular point after the motion. $T = (\vec{V}_{t-1}, \Sigma_{t-1}, \vec{V}_t, \Sigma_t)$. This information allows estimating the full 3D motion between successive stereo frames. Note that the noise governing the data does not have the same magnitude for every point nor does it have the same shape for every point. This type of noise is called inhomogenous nonisotropic. An optimal motion estimator for heteroscedastic point clouds is given in the paper "Estimation of nonlinear errors-in-variables models for computer vision applications" by B.C. Matei and P. Meer, IEEE Transactions on Pattern Analysis and Machine Intelligence, Vol. 28, No. 10, October 2006. This approach first finds an initial estimate using the method of minimal squared distances, ignoring the heteroscedasticity of the data-set. Then, it refines this intimal estimate by taking into account the noise shape and magnitude for every point using an iterative process.

It might be useful to measure how well two time-corresponding 3D points align with a motion estimate. Thereto, the Bhattacharyya distance migth be introduced. Given two points $\vec{V}_{t-1}$ and $\vec{V}_t$, the estimate motion M is applied on $\vec{V}_t$ and $\vec{\Sigma}_t$. The Bhattacharyya distance is then computed as:

$$D = \frac{1}{4}(\vec{V}_t - \vec{V}_{t-1})(\Sigma_t - \Sigma_{t-1})(\vec{V}_t - \vec{V}_{t-1}) + \frac{1}{2}\log(\frac{\left|\Sigma_t + \Sigma_{t-1}\right|}{2\sqrt{\left|\Sigma_t\right|\left|\Sigma_{t-1}\right|}}) \qquad (20)$$

An exemplary method according to the present invention comprises the following steps:

1) Left-to-right pixel matching and matching between stereo frames from $t_n$ to $t_{n+1}$. SIFT (Scale-Invariant Feature Transform) is used with a limited scale-space (only the first two octaves). This is possible since recording is carried out at, for example, 30 Hz and since the scale varies little between consecutive frames.

2) Determining the positional uncertainty of the pixels. By determining the image gradient at the location of the pixels we can approximate the uncertainty in the image position up to a scale. This uncertainty or covariance is subsequently scaled with the scale on which the SIFT feature is detected.

3) Standard triangulation to reconstruct the 3D position of the matched pixels. In addition, error propagation by means of the first derivative of the triangulation function and the uncertainty in the pixels is carried out.

4) Additionally, the position difference has to match the expected movement (the points / pixels have to move towards the camera). Points which are marked in the previous frame as outliers are also ignored.

5) Of the remaining set of 3D points, 6 points are selected at random. For these points the HEIV motion estimator is utilized. This is carried out until 250 estimates are obtained which lie within the expected movement of the vehicle (compare flight envelope).

6) The new robust mean ego-motion filter is applied on these 250 estimates.

7) The robustly obtained average movement is used to classify points as in- or outliers. This is done by means of a divergence measure (a measure of the Mahanalobis type).

8) Steps 5 and 6 are carried out again on the inlier points to arrive at the final result.

9) The trajectory is simply built up from the concatenation of all ego-motion estimations. SLAM, multiple-frame feature tracking or bundle adjustment are therefore not used.

An overview of an embodiment of the method according to the invention is described below.

1) Predict the current motion based on the previous motion with $M^t = M^{t-1}$ and

$$\Sigma_{\mathrm{m}}^{t} = \Sigma_{\mathrm{m}}^{t-1} + O(\Sigma_{\mathrm{m}}^{t-1}).$$

2) Find the correspondences by using the SIFT matching procedure as described above and create the set T of time corresponding 3D points with their uncertainty i.e. $T = \{T^1.....T^n\}$ using equations (16),(17),(18) and (19).

3) Create I minimal subset motions with:

for I iterations do

- take at random 6 points from $T$
- estimate the motion on these six points using the fast estimator described in the article "Least square estimation of transformation parameters between twopoint patterns" by S. Umeryama, IEEE Transactions on Pattern Analysis and Machine Inteliigence, vol. 13, no. 4, pages 376-380, 1991

end for.

This gives a set of motion samples i.e.. $M = \{M_1.....M_k\}$

4) Compute the weights $I_i$ and $O_i$ for each motion sample given the predicted motion with equation (12).

5) Compute the weighted mean motion $\overline{M}$ and its covariance matrix $\Sigma_m$ using equations (10) and (15).

6) start the EM algorithm:

for 15 iterations do

- compute the weights $I_i$ and $O_i$ for each motion sample given the new mean motion using equation (12)
- compute a new mean motion M based on the new weights using equation (10)

- compute the motion covariance matrix $\Sigma_{\mathrm{m}}^{k}$ based on the new mean and the weights using equation (15)

end for

7) Return the mean motion $\overline{M}$ and its covariance matrix $\Sigma_m$.

The embodiment of the method according to the invention including the EM-SE(3) algorithm has been compared against a RANSACc based approach which is summarized below. Instead of the usual scoring based on the amount of inliers, the least median of squared distances LmedS variant of RANSAC is used.

To ensure with a probability of p that six inlier time correspondences are taken from T and assuming an outlier probability of $\varepsilon$=K/100, the required number of minimal subset motions can be computed with the equation

$$\mathrm{I} = \log{(1 - \mathrm{p})} / \log{(1 - (1 - \varepsilon)^6)}. \qquad (21)$$

On the other hand, a RANSAC based approach comprises the following steps.

1) As in step 1 of the overview of an embodiment of the method according to the invention.

2) Create I minimal subset motions with:

For I iterations do

- Take at random 6 points from $T$
- Estimate the motion on these six points using the method described in the article "Least square estimation of transformation parameters between twopoint patterns" by S. Umeryama, IEEE Transactions on Pattern Analysis and Machine Inteliigence, vol. 13, no. 4, pages 376-380, 1991
- Compute the median of the Bhattacharyya distances obtained by

applying the estimated motion to all points in $\tilde{T}$, as described aobve end for.

This gives a set of motion samples i.e. $M = \{M_1.....M_k\}$

3) Select from *M* that motion estimate M with the lowest LmedS score

4) Only keep K percent of the elements from T that best fit the initial motion estimate $\tilde{M}$ using the method described above using the Bhattacharyya distance in equation (20). This gives the new estimated set of inlier landmarks $\tilde{T}$

5) Estimate the final motion $\overline{M}$ on the new $\tilde{T}$ using the advanced estimator described in the paper "Estimation of nonlinear errors-in-variables models for computer vision applications" by B.C. Matei and P. Meer, IEEE Transactions on Pattern Analysis and Machine Intelligence, Vol. 28, No. 10, October 2006, and return.

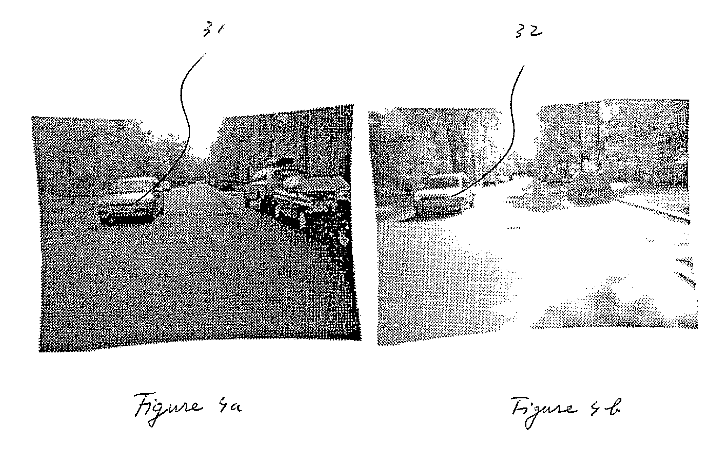

The embodiment of the method according to the invention including the EM-SE(3) algorithm has been compared against the RANSAC based approach. Both algorithms have been evaluated on a real-world automotive data-set. The data-set contains approximately 2800 images and spans about 600 meter. It was recorded using a stereo camera with a baseline of approximately 40 centimeters. Furthermore, an image resolution of 640 by 480 pixels has been used at 30 frames per second. An impression of the real data stereo-images in the data-set is given in Figures 4a and 4b, each showing a moving vehicle 31; 32 to be classified as an outlier. In parallel to the stereo-frames, also standard GPS positions were recorded. Both the GPS readouts and the stereo-frames have synchronized time-stamps. This could be exploited for comparing the estimated motion at any time with the GPS based ground truth. However, because of the inaccuracy and sparsity of the GPS readouts, a different performance metric is used. The data-set encompasses an almost exact loop. Ideally, the final estimated pose should be the same as the starting pose. Therefore, the performance metric is the distance between the final estimated position and the starting position.

Both the novel EM-SE(3) algorithm and the RANSAC based approach were tested assuming an outlier percentage of K = 50. To ensure with a probability of 0.99 that at least one minimal-set motion estimate contains no outliers, I is set to 293, see equation 21. for the EM-SE(3) algorithm, p(I) is set to 0.5 and C is set to 5000. This ensures that approximately 50% of the motion estimates will be classified as outliers.

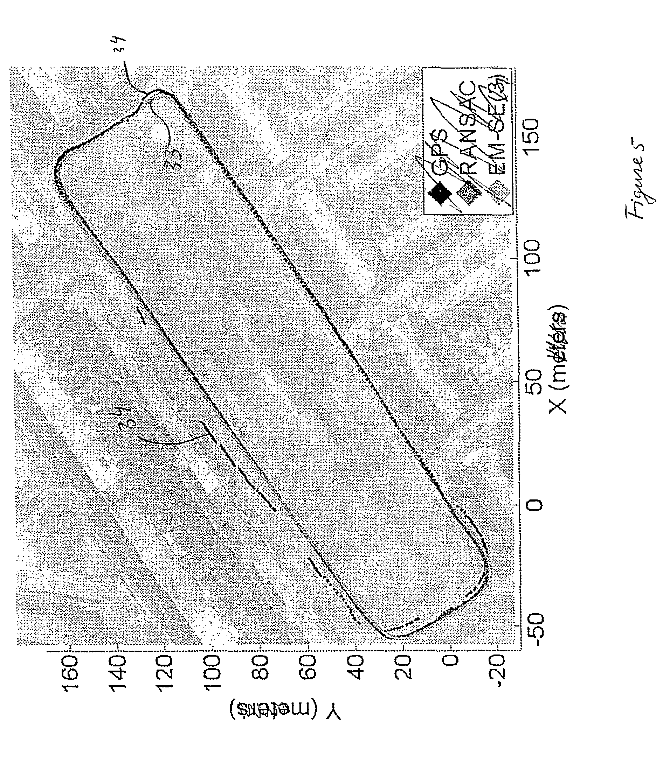

A top view of the trajectories estimated by the EM-SE(3) algorithm as well as by the RAMSAC algorithm is given in Figure 5. In the view, said trajectories 33 coincide. Further, the top view shows the trajectory 34 according to GPS data. The trajector 33 is estimated by, while a second trajectory 34 is estimated by the RAMSAC algorithm. Clearly, both methods perform satisfactory when the motion is constrained to lay within the ground-plane. The 2D errors at the loop-closing point are 6.9 m for RAMSAC and 7.2 m for EM-SE(3). For both methods, this is only 1.2 % of the total travelled distance. Figure 5 also points out the limitations, in terms of accuracy and availability, of the standard GPS signal. However, the GPS error is bounded because its readings are absolute, whereas the error in both visual-odometry systems will accumulate indefinitely.

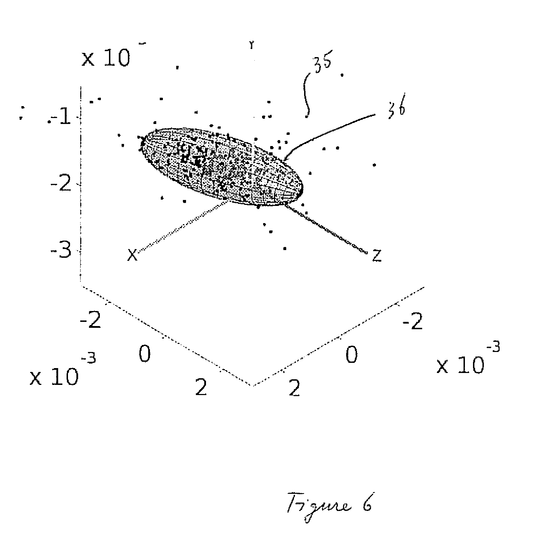

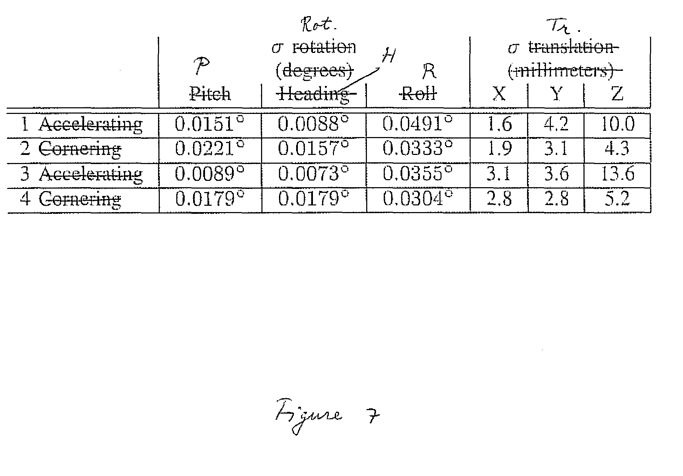

Both methods suffer from a small bias in estimated roll angle. This is probably due to improper calibration and synchronization of the stereo-rig. Over long time spans, this causes errors in height when the vehicle drives around corners. A benefit of this artefact is that it allows us to demonstrate one of the key features of the proposed algorithm: the ability to estimate on-line the uncertainty in the computed robust motion. For one particular estimate, the rotation covariance matrix $\Sigma_q$ is visualized in Figure 6. Here, rotation samples are given with dots 35 while the covariance is visualized by the ellipsoidal element 36. It can be seen that the largest uncertainty is in rotation around an axis almost parallel to the Z axis, i.e. roll. In fact, the eigenvector of $\Sigma_q$ with the largest eigenvalue, principal component, is the axis around which the error in rotation is most likely to occur, its eigenvalue is the mean squared error of the rotation angle around this axis. By converting the diagonal of $\Sigma_q$ to a rotation vector and extracting its Euler angles, the standard deviation in pitch, heading and roll can be approximated. Figure 7 shows a table illustrating these standard devications in rotation, σ rotation (Rot.) in degrees and σ translation (Tr.) in mm, for several segments from the data-set. Here, P, H and R denote pitch, heading and roll, respectively. The first and third data row relate to accelaring of the camera system while the second and fourth data row relate to taking a corner. It can clearly be seen that most uncertainty occurs in the estimated roll angle. Also note the larger deviations in translation over the Z axis when the vehicle is accelarating. Knowing the magnitude of these errors, whether arising from poor calibration or independent moving objects, is crucial for optimally fusing th emotion estimate with other motion or pose sensors. It should be noted that for this application the covariance $\Sigma_q$ can be used directly instead of the appximated standard deviations in Euler angles. This is of particular interest when the motion estimate has to be fused with other motion or orientation sensors e.g. an attitude and heading reference system (AHRS), for example in a simultaneous localization and mapping system.

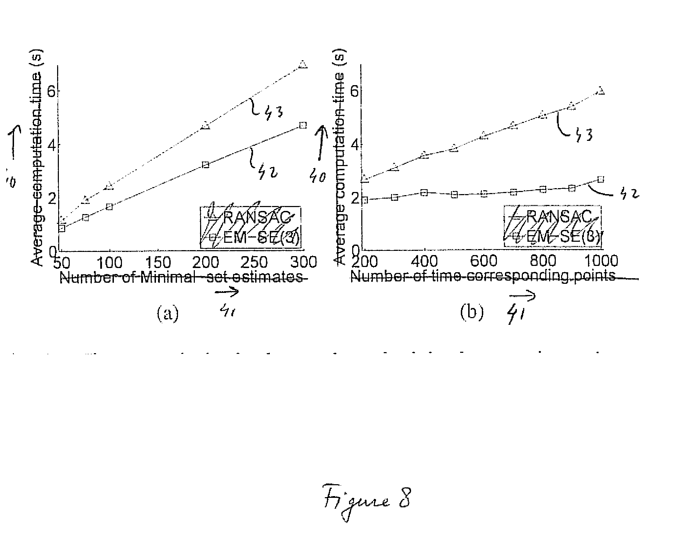

To measure the computational complexity, both methods were evaluated using various parameter settings, the results of the evaluation are plotted in Figures 8a and 8b showing a performance graph of the methods. Specifically, the average computation time 40 is shown as a function of the number of minimal set estimates 41. Here, a first interpolated curve 42 is associated with the EM-SE(3) approach while a second interpolated curve 43 is associated with the Ramsac approach. It can be seen that the novel EM-SE(3) algorithm requires less computation time and scale more favorably in the number of landmarks, which in our case are the itme corresponding SIFT features.

The method of estimating a motion of a multiple camera system in a 3D space can be performed using dedicated hardware structures, such as FPGA and/or ASIC components. Otherwise, the method can also at least partially be performed using a computer program product comprising instructions for causing a processor of the computer system to perform the above described steps of the method according to the invention.

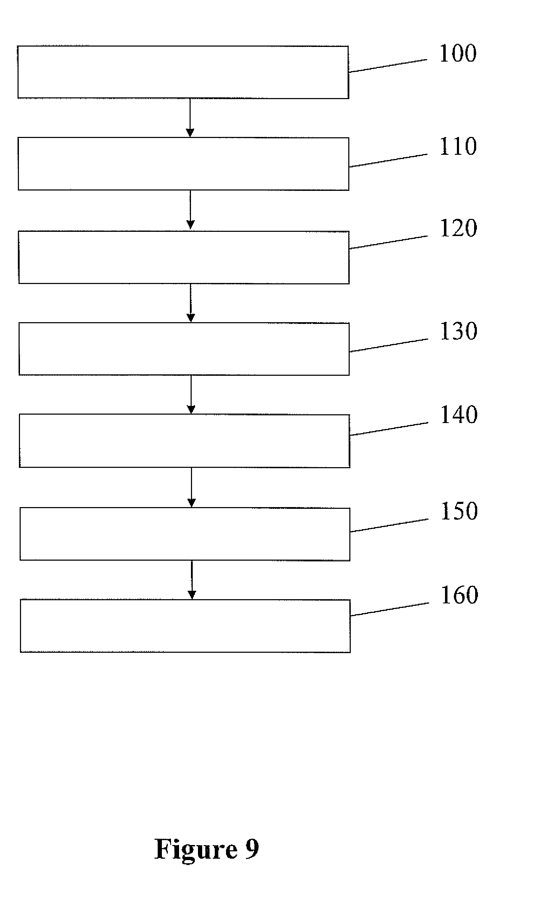

Figure 9 shows a flow chart of an embodiment of the method according to the invention. The method comprises the steps of providing (100) a subsequent series of image sets that have substantially simultaneously been captured by the multiple camera system, identifying (110) a multiple number of corresponding image features in a particular image set, determining (120) 3D positions associated with said image features based on a disparity in the images in the particular set, determining (130) 3D positions associated with said image features in a subsequent image set, calculating (140) a multiple number of initial motion estimates for a motion of the multiple camera system between the time instant associated with the particular image set and the time instant of the subsequent image set, based on 3D position differences of image features in images of the particular set and the subsequent set, captured by a specific camera, characterizing (150) the motion by motion parameters represented in the group of rigid-body motion in 3D, and determining (160) an optimal set of motion parameters in the group of rigid-body motion in 3D.

It will be understood that the above described embodiments of the invention are exemplary only and that other embodiments are possible without departing from the scope of the present invention. It will be understood that many variants are possible.

Instead of using a two camera system, the system according to the invention can also be provided with more than two cameras, e.g. three, four or more cameras having a field of view that at least partially coincides.

The cameras described above are arranged for capturing visible light images. Obviously, also cameras that are sensible to other electromagnetic ranges can be applied, e.g. infrared cameras.

Further, instead of mounting the multiple camera system according the invention on a wheeled vehicle, the system can also be mounted on another vehicle type, e.g. a flying platform such as a plane. Alternatively, the multiple camera system according to the invention can implemented as a handheld device.

Such variants will be obvious for the person skilled in the art and are considered to lie within the scope of the invention as formulated in the following claims.

**Claims**

1. A method of estimating a motion of a multiple camera system in a three-dimensional (3D) space, wherein the field of view of multiple cameras at least partially coincide, the method comprising the steps of:

   - providing a subsequent series of image sets that have substantially simultaneously been captured by the multiple camera system;
   - identifying a multiple number of corresponding image features in a particular image set;
   - determining 3D positions associated with said image features based on a disparity in the images in the particular set;
   - determining 3D positions associated with said image features in a subsequent image set;
   - calculating a multiple number of initial motion estimates for a motion of the multiple camera system between the time instant associated with the particular image set and the time instant of the subsequent image set, based on 3D position differences of image features in images of the particular set and the subsequent set, captured by a specific camera;
   - characterizing the motion by motion parameters represented in the group of rigid-body motion in 3D; and
   - determining an optimal set of motion parameters in the group of rigid-body motion in 3D.

2. A method according to claim 1, wherein the determining step comprises applying an expectation maximization algorithm to the motion parameters in a local linearization of the group of rigid-body motion in 3D.

3. A method according to claim 1 or 2, further comprising the step of adding estimated motions associated with motions performed after successive time instants.

4. A method according to any previous claim, further comprising the step of computing an error estimation of a motion estimation.

5. A method according to any previous claim, wherein the motion parameters include 3D motion information and 3D rotation information of the multiple camera system.

6. A method according to any previous claim, wherein the step of calculating a multiple number of initial motion estimates includes using a method of minimal squared distances.

7. A method according to any previous claim, wherein the step of applying an expectation maximization algorithm includes an iterative process wherein motion estimates are weighted according to inlier and outlier models.

8. A method according to claim 7, wherein the inlier model includes a Gaussian distribution.

9. A method according to claim 7 or 8, wherein the outlier model includes a uniform distribution.

10. A method according to any of claims 7-9, wherein at each iteration, a local linearization of the group of rigid-body motion in 3D is performed with respect to a mean motion found in a previous iteration.

11. A multiple camera system for movement in a three-dimensional (3D) space, comprising a multiple number of cameras having a field of view that at least partially coincides, the cameras being arranged for subsequently substantially simultaneously capturing image sets, the multiple camera system further comprising a computer system provided with a processor that is arranged for performing the steps of:

   - identifying a multiple number of corresponding image features in a particular image set;
   - determining 3D positions associated with said image features based on a disparity in the images in the particular set;
   - determining 3D positions associated with said image features in a subsequent image set;
   - calculating a multiple number of initial motion estimates for a motion of the multiple camera system between the time instant associated with the particular image set and the time instant of the subsequent image set, based on 3D position differences of image features in images of the particular set and the subsequent set, captured by a specific camera;
   - characterizing the motion by motion parameters represented in the group of rigid-body motion in 3D; and
   - determining an optimal set of motion parameters in the group of rigid-body motion in 3D.

12. A computer program product for estimating a motion of a multiple camera system in a three-dimensional (3D) space, wherein the field of view of multiple cameras at least partially coincide, the computer program product comprising computer readable code for causing a processor to perform the steps of:

   - providing a subsequent series of image sets that have substantially simultaneously been captured by the multiple camera system;
   - identifying a multiple number of corresponding image features in a particular image set;
   - determining 3D positions associated with said image features based on a disparity in the images in the particular set;
   - determining 3D positions associated with said image features in a subsequent image set;
   - calculating a multiple number of initial motion estimates for a motion of the multiple camera system between the time instant associated with the particular image set and the time instant of the subsequent image set, based on 3D position differences of image features in images of the particular set and the subsequent set, captured by a specific camera;
   - characterizing the motion by motion parameters represented in the group of rigid-body motion in 3D; and
   - determining an optimal set of motion parameters in the group of rigid-body motion in 3D.

Figure 1

Figure 2

EP 2 093 713 A2

Figure 3

16

31

32

Figure 4a

Figure 4b

Figure 5

Figure 6

| | $\mathcal{P}$ | Rot. σ rotation (degrees) $\mathcal{H}$ | $\mathcal{R}$ | Tr. σ translation (millimeters) | | |
|---|---|---|---|---|---|---|
| | Pitch | Heading | Roll | X | Y | Z |
| 1 Accelerating | 0.0151° | 0.0088° | 0.0491° | 1.6 | 4.2 | 10.0 |
| 2 Cornering | 0.0221° | 0.0157° | 0.0333° | 1.9 | 3.1 | 4.3 |
| 3 Accelerating | 0.0089° | 0.0073° | 0.0355° | 3.1 | 3.6 | 13.6 |
| 4 Cornering | 0.0179° | 0.0179° | 0.0304° | 2.8 | 2.8 | 5.2 |

Figure 7

20

Figure 8

Figure 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1727089 A

- WO 2006002322 A

**Non-patent literature cited in the description**

- **B.C. Matei ; P. Meer.** Estimation of nonlinear errors-in-variables models for computer vision applications. *IEEE Transactions on Pattern Analysis and Machine Intelligence,* October 2006, vol. 28 (10), 1537-1552

- **S. Umeryama.** Least square estimation of transformation parameters between twopoint patterns. *IEEE Transactions on Pattern Analysis and Machine Inteliigence,* 1991, vol. 13 (4), 376-380

- **M. A. Fischler ; R. C. Bolles.** Random sample consensus: a paradigm for model fitting with applications to image analysis and automated cartography. *Communications of the ACM,* June 1981, vol. 24 (6), 381-395

- **F. Park.** Distance metrics on the rigid-body motions with applications to mechanism design. *Transactions of the ASME,* 1995, vol. 117

- **D.G. Lowe.** Distinctive image features from scale-invariant keypoints. *International Journal of Computer Vision,* 2004, vol. 60 (2

- A combined corner and edge detector. **Harris et al.** Proceedings of the 4th Alvey Vision Conference. 1988, 147-151

- SURF:speede up robust features. **Bay et al.** Proceedings of the nineth European nConference on Computer Vision. May 2006

- **B.C. Matei ; P. Meer.** Estimation of nonlinear errors-in-variables models for computer vision applications. *IEEE Transactions on Pattern Analysis and Machine Intelligence,* 10 October 2006, vol. 28

- **B.C. Matei ; P. Meer.** Estimation of nonlinear errors-in-variables models for computer vision applications. *IEEE Transactions on Pattern Analysis and Machine Intelligence,* October 2006, vol. 28 (10